# FASCICULE DE BREVET EUROPEEN

(11) **EP 3 106 655 B1**
(45) Date de publication et mention de la délivrance du brevet: **23.10.2019**
(21) Numéro de dépôt: 16174499.0
(22) Date de dépôt: 15.06.2016
(51) Int. Cl.: F03B 7/00

(54) **TURBINE HYDRAULIQUE À FLUX TRAVERSANT**
HYDRAULISCHE DURCHSTRÖMTURBINE
HYDRAULIC TURBINE WITH THROUGH FLOW

(30) Priorité: 16.06.2015 FR 1555471
(43) Date de publication de la demande: 21.12.2016
(73) Titulaire: Hydro Meca De Lavaur, 63340 Saint Germain Lembron (FR)
(72) Inventeur: BERGHEAUD, Fabien, 63340 SAINT GERMAIN LEMBRON (FR)
(74) Mandataire: Dennemeyer & Associates S.A.

(56) Documents cités:
- DE-C- 337 722
- DE-C- 388 530
- DE-C1- 3 327 457
- GB-A- 238 790
- JP-A- S60 162 072
- US-A1- 2009 314 353

## Description

La présente invention concerne une turbine hydraulique à flux traversant. Une telle turbine hydraulique a été imaginée en 1903 par A.G.M. Mitchell et amélioré par la suite par D. Banki. Elle est couramment désignée par l'expression « Turbine Banki ou Turbine de type Banki ». Cette turbine est de construction simple et elle comporte trois parties principales : une arrivée d'eau contrôlée, une roue en forme de tambour pourvue d'aubes périphériques profilées et dont l'arbre de rotation est relié à une génératrice électrique et une sortie d'eau.

Dans une telle turbine, l'eau traverse deux fois la roue. L'eau pénètre dans la roue et induit une poussée sur les aubes dirigée de l'extérieur de la roue vers l'intérieur, donc vers l'arbre de rotation. En sortant de la roue, sensiblement à l'opposé du point d'entrée, l'eau induit une seconde poussée sur les aubes dirigée alors de l'arbre de rotation, donc de l'intérieur, vers l'extérieur de la roue. Ces turbines sont particulièrement adaptées à un fonctionnement avec de faibles chutes d'eau et/ou un débit faible. Pour cela, elles sont considérées à vitesse lente. Ce type de turbine se différencie d'autres turbines, telle celle connue d'US-A-2009/314353 qui comprend deux roues à aubes parallèles mises en rotation par le passage de l'eau sur les aubes périphériques, un volet permettant sélectivement d'alimenter une ou les deux roues en eau. Comme turbine à flux traversant, on peut citer celle connue de DE-C-388530 équipé d'un volet permettant de fermer l'arrivée d'eau, le volet se déplaçant selon la section transversale de la conduite d'arrivée d'eau. On connait aussi par JP-A-S60162072 une turbine à flux traversant dont le débit d'arrivée d'eau est régulé par un volet situé dans l'arrivée d'eau et mobile entre une position d'obturation de l'arrivée d'eau et une position d'ouverture maximale où il est en contact avec les aubes du rotor de la turbine. Les différentes turbines connues ne permettent pas de stopper aisément l'arrivée d'eau en cas de dysfonctionnement des organes de commandes de la turbine.

L'invention vise à proposer une turbine hydraulique à flux traversant, donc de type Banki, d'une construction et d'une maintenance aisées tout en ayant un rendement et un fonctionnement optimisés avec une mise en sécurité optimale et simple.

A cet effet, l'invention a pour objet une turbine hydraulique à flux traversant, comportant au moins une arrivée d'eau contrôlée par un volet mobile entre une première position d'ouverture et une seconde position de fermeture de l'arrivée d'eau, un rotor en forme de tambour, pourvu d'aubes périphériques profilées, dont l'arbre de rotation est relié à une génératrice électrique, et une sortie d'eau, l'arrivée d'eau comprenant une canalisation dont une zone voisine de son extrémité ouverte en contact avec la périphérie du rotor est non rectiligne, la courbure de ladite zone étant non circulaire et en ce que le volet de contrôle de l'arrivée d'eau étant, en position d'ouverture, aligné avec un organe de guidage de l'eau fixe situé dans ladite zone non rectiligne, caractérisée en ce qu'un ressort maintient le volet en position fermée, en cas de défaillance des organes de commande et d'arrêt de la rotation de la turbine.

Lorsque l'eau pénètre dans la turbine, elle est guidée et mise en mouvement selon une direction permettant à l'eau, lors de son entrée dans le rotor, donc lors de son passage entre deux aubes voisines, d'avoir une vitesse optimale. En d'autres termes, le mouvement initial de l'eau entrant dans le rotor induit par la configuration de la sortie de la canalisation d'arrivée d'eau permet d'éviter, ou pour le moins de limiter au maximum, les chocs de l'eau sur les aubes ou l'arbre de rotation du rotor. De cette manière, on optimise l'écoulement, sans à-coup, au niveau du rotor.

Grâce à l'invention, en cas de défaillance de la turbine ou coupure électrique, la turbine est mise en sécurité, de manière automatique par le ressort qui va maintenir le volet en position fermée, donc en stoppant l'arrivée d'eau et de ce fait la rotation du rotor. L'utilisation d'un tel ressort permet de s'affranchir de tout dispositif de mise en sécurité électrique, pneumatique ou, plus généralement, nécessitant une source d'énergie. Ici, la solution est purement mécanique et d'un encombrement réduit, ce qui permet de réduire la taille de la turbine.

Selon des aspects avantageux mais non obligatoires de l'invention, une telle turbine peut comprendre une ou plusieurs des caractéristiques suivantes:
- L'organe de guidage est une plaque courbée selon une courbure non circulaire et fixée dans la canalisation d'arrivée d'eau.
- La courbure de l'organe de guidage est similaire à la courbure de la zone de l'extrémité de la canalisation d'arrivée d'eau en contact avec la périphérie du rotor.
- La courbure de l'organe de guidage est différente de la courbure de la zone de l'extrémité de la canalisation d'arrivée d'eau en contact avec la périphérie du rotor.
- Le volet est, en section transversale, profilé en saumon d'aile d'avion.
- L'extrémité effilée du volet est, en position d'ouverture, située dans le prolongement d'une extrémité de l'organe de guidage et adjacente à cette dernière.
- Le volet est monté pivotant autour d'un arbre de rotation décalé par rapport au centre de gravité du volet, de sorte que la position fermée soit la position d'équilibre du volet.
- L'organe de guidage de l'eau est situé en position médiane dans la zone non rectiligne de la canalisation d'arrivée d'eau.

L'invention sera mieux comprise et d'autres avantages de celle-ci apparaitront plus clairement à la lecture de la description d'un mode de réalisation de l'invention qui va suivre, donnée uniquement à titre d'exemple non limitatif et faite en référence aux dessins annexés dans lesquels:
- La figure 1 est une vue en perspective d'une turbine conforme à l'invention,
- la figure 2 est une vue en perspective, de la turbine, à partir du dessous de la turbine et à la même échelle que la figure 1, montrant l'intérieur de la turbine,
- la figure 3 une vue en perspective de la turbine, à la même échelle que la figure 1 et à partir d'un côté de la turbine, la paroi latérale n'étant pas représentée pour illustrer l'intérieur de la turbine, le volet d'admission de l'eau étant en configuration fermée,
- la figure 4 est une vue de côté, à la même échelle que la figure 1, de la turbine, sans la paroi latérale, le volet d'admission de l'eau étant en une position intermédiaire,
- la figure 5 est une vue similaire à la figure 4, le volet d'admission de l'eau étant en configuration totalement ouverte et
- la figure 6 est une vue partielle de côté, à plus grande échelle, de l'arrivée d'eau sur le rotor de la turbine.

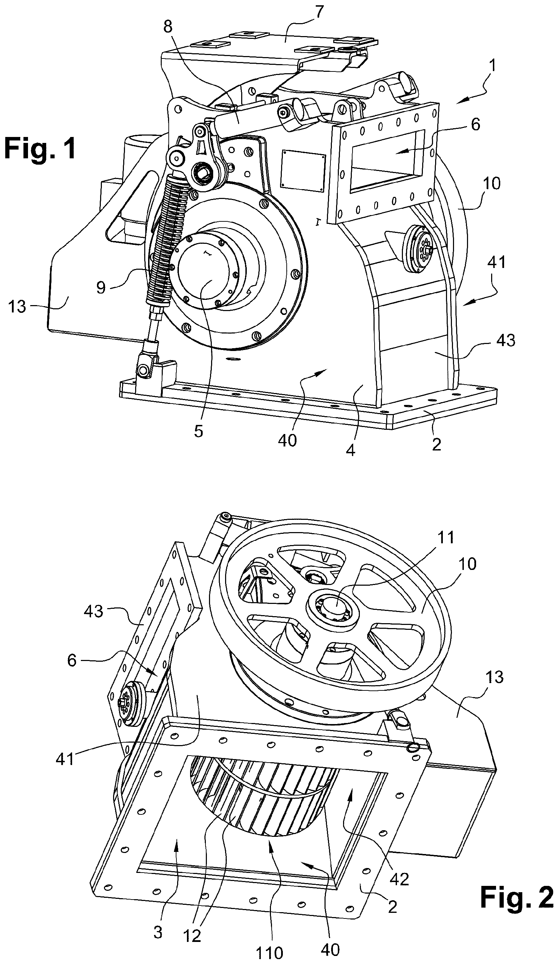

La figure 1 illustre une turbine 1 conforme à un mode de réalisation de l'invention. La turbine 1 illustrée aux différentes figures correspond à un mode réalisation d'une turbine dite picoturbine, pour une mise en oeuvre dans un cours d'eau permettant de produire de 5 kW à 15 kW. Une telle turbine 1 est aisée à mettre en oeuvre soit seule soit associée à d'autres turbines, identiques ou non, voire à d'autres dispositifs de production d'électricité, que ce soit à partir de l'eau ou d'une autre source d'énergie.

La turbine 1 comprend un socle 2, fixé avantageusement au sol, au-dessus d'un point d'évacuation de l'eau, non visible. Pour cela, le socle 2 est pourvu d'une ouverture 3, ici rectangulaire, visible à la figure 2. Cette ouverture 3 est adaptée pour assurer l'évacuation de l'eau en sortie de turbine, que ce soit dans un cours d'eau, un plan d'eau naturel ou artificiel ou encore dans un canal. On conçoit que l'on peut disposer plusieurs turbines 1, identiques ou non en série, la sortie d'eau d'une turbine alimentant indirectement en eau la turbine suivante. Au-dessus du socle 2, en regardant la figure 1, se trouve un châssis 4 qui définit un volume fermé recevant les divers éléments constitutifs de la turbine 1.

A la figure 1, l'extrémité du logement 5 recevant l'arbre central, donc l'arbre de rotation, du rotor, est visible sur un flanc 40 du châssis 4. En partie haute du châssis 4, plus particulièrement sur un flanc 43 formant un autre côté du châssis 4, une arrivée d'eau 6 est prévue. Ici, l'arrivée d'eau est formée par une découpe 6 ménagée dans une paroi 43 permettant l'entrée d'eau à partir de l'extérieur en direction de l'intérieur de la turbine 1. L'arrivée d'eau 6 est connectée à une conduite forcée, non représentée. Avantageusement, il s'agit d'une conduite amenant par gravité l'eau à la turbine. On conçoit, en variante, que l'arrivée d'eau 6 est alimentée par une conduite d'eau reliée à une pompe de relevage. Dans tous les cas, il convient que l'arrivée d'eau soit effectuée par une conduite, une telle turbine n'étant pas adaptée pour être alimentée directement par une chute d'eau en milieu ouvert. Les ouvertures 3 et 6 sont de dimensions et de formes adaptées permettant d'assurer un débit d'entrée et un débit de sortie de l'eau de la turbine similaires.

Sur le dessus du châssis, en regardant la figure 1, une platine 7 forme un support pour recevoir une génératrice électrique, connue en soi et non illustrée. En variante, la génératrice est située ailleurs que sur la platine 7, à proximité de la turbine 1.

Un vérin 8 et un ressort 9 sont visibles sur le flanc 40, à la figure 1. Ce vérin 8 est relié, par une extrémité, au socle 2 et, par l'autre extrémité, à une bielle de commande d'une vanne, non visible. Le fonctionnement de ces éléments sera précisé plus loin.

Sur un flanc 41, visible à la figure 2, opposé et parallèle au flanc 40, un volant 10 est fixé. Il est entrainé directement en rotation par l'arbre central 11 du rotor 110 sur lequel elle est montée. Le volant 10 est relié par une courroie, non représentée, à un arbre d'entrainement de la génératrice ou accouplé directement à la génératrice ou à un multiplicateur. En d'autres termes, le volant 10 assure la liaison entre la turbine 1 et la génératrice d'électricité.

A la figure 2, des aubes 12 du rotor 110 sont visibles à partir de la sortie d'eau 3 ménagée dans le socle 2. Les aubes 12 sont configurées en plaques allongées, non planes. Les concavités des aubes 12 sont orientées dans le même sens, à savoir en direction inverse du sens de rotation du rotor 110. Les aubes 12 s'étendent selon un angle donné, à partir de l'arbre central 11 en direction de l'extérieur du rotor 110. Comme cela ressort de la figure 2, les aubes 12 sont entièrement logées dans le châssis 4, dans le volume délimité, d'une part, par les flancs parallèles 40, 41 et d'autre part, par les deux autres flancs 42, 43, parallèles, définissant les deux autres côtés du châssis 4 et perpendiculaires aux flancs 40, 41.

Sur la face externe du flanc 42, un support fermé 13 abrite des organes moteur et/ou de commande de la turbine 1. Il s'agit, par exemple, du groupe hydraulique actionnant le vérin 8. Ces organes, connus en soi, ne sont pas illustrés.

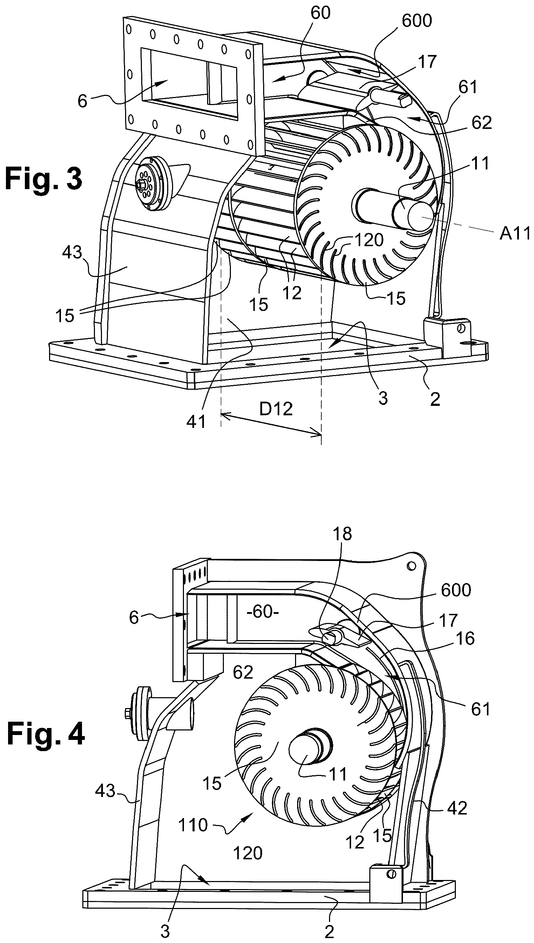

La figure 3, du fait de la suppression du flanc 40, permet de visualiser l'intérieur de la turbine 1, au niveau des éléments actifs, c'est-à-dire des éléments mobiles de celle-ci, à savoir le rotor 110 et un volet de contrôle 17 du débit d'eau arrivant sur le rotor 110.

Les aubes 12 sont maintenues en position, à savoir régulièrement espacées et disposées de sorte que leurs plus grandes dimensions ou longueur D12 soient parallèles à l'axe longitudinal A11 de l'arbre central 11, par des disques 15. Ces deniers sont, dans l'exemple, au nombre de trois. Ils maintiennent les aubes 12 par les extrémités de ces dernières ainsi qu'en au moins un autre point situé entre les extrémités des aubes, par exemple à une distance voisine d'un tiers de la longueur D12. On conçoit que le nombre, la répartition et/ou la taille des disques 15 sont adaptés à la géométrie du rotor 110.

Comme cela ressort de la figure 3, les disques 15 comprennent des fentes formant des logements de réception des extrémités libres 120 des aubes 12. De ce fait, le disque 15 central est traversé de part en part par les aubes 12. Les disques 15 sont, avantageusement, fixés de manière définitive sur l'arbre 11. Une telle configuration implique que le rotor 110 est creux et ouvert, l'eau pouvant circuler librement entre la périphérie du rotor et la partie centrale, donc l'arbre 11, du rotor 110.

En partie haute du châssis et en regardant la figure 3, on note que l'arrivée d'eau 6 forme le débouché d'une conduite ouverte 60, située à l'intérieur du châssis 4. Ici, la conduite 60 est de section transversale rectangulaire, donc, ici, de forme similaire à celle de l'arrivée d'eau 6. La conduite 60 assure l'alimentation en eau du rotor 110 à partir de l'arrivée 6, étant entendu que l'arrivée 6 constitue de facto une des extrémités ouvertes de la conduite 60.

L'extrémité ouverte 61 de la conduite 60, opposée à l'arrivée d'eau 6, assure l'alimentation en eau du rotor 110. Ici, la conduite 60 et l'arrivée d'eau 6 sont horizontales. En variante, elles peuvent être orientées angulairement, entre 0° et plus ou moins 90° par rapport à l'horizontale. L'extrémité 61 est définie par, d'une part, un plan incliné 62 et, d'autre part, par une zone incurvée 600 de la conduite 60, dont une portion est rectiligne et sensiblement parallèle au plan 62. La zone 600 est incurvée selon une courbe non circulaire.

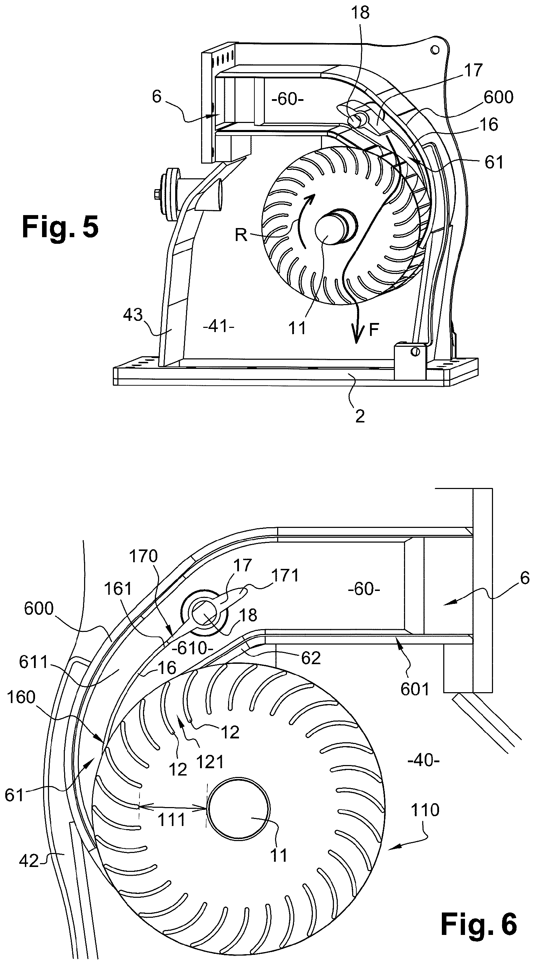

L'extrémité 61 de la conduite 60 est positionnée angulairement par rapport au bord périphérique du rotor 110 qui est défini par les bords de plus grandes dimensions des aubes 12. La zone de contact entre l'eau et le rotor 110 est ainsi située sur un quart supérieur du rotor 110, comme cela ressort particulièrement des figures 4 et 5. On note que la longueur de la section transversale rectangulaire de la conduite 60 est la même que la longueur des aubes 12, ce qui permet d'alimenter en eau de manière similaire tous les points de la périphérie du rotor 110 situés sous la sortie 61.

Comme cela apparait particulièrement aux figures 4 à 6, un organe de guidage 16 est monté dans la conduite 60. Cet organe 16, formé par une plaque métallique profilée, s'étend sur toute la longueur de la section transversale de l'extrémité 61. La plaque 16 est incurvée, sa courbure étant adaptée à celle de la portion 600 de la conduite 60, donc la plaque 16 est incurvée selon une courbure non circulaire.

La plaque 16 est fixée sensiblement en position médiane dans la conduite 60, à proximité de l'extrémité 61, au niveau de la portion courbée 600. Ainsi, de facto, on divise en deux extrémités similaires 610, 611, l'extrémité 61 par la présence de l'organe de guidage 16. En variante, la plaque 16 est en une position autre que la position médiane et/ou sa courbure est différente de la courbure de la zone 600.

Dans la mesure où les courbures de la portion 600 et de l'organe de guidage 16 sont adaptées mais non identiques au rayon des disques 15, donc au rayon du rotor 110, on induit une trajectoire courbe non circulaire à l'eau entrant dans le rotor. Une telle trajectoire permet non seulement que le mouvement initial de l'eau soit non radial et efficacement dirigé sur le rotor 110 mais également que le passage de l'eau entre deux aubes 12 voisines soit optimal, c'est-à-dire que l'eau ne frappe pas perpendiculairement la face concave des aubes mais plutôt s'écoule en suivant la courbure de la concavité.

En d'autres termes, on initie une mise en rotation de l'eau, préalablement à son contact avec les aubes 12, de sorte que le mouvement de l'eau soit, dès son contact avec le rotor 110, similaire au mouvement des aubes 12. Ainsi on limite l'effet de choc de l'eau sur les aubes 12 selon une direction perpendiculaire à leurs concavités, ce qui a pour effet de générer des à-coups dans la rotation du rotor 110. La présence de l'organe de guidage 16 participe non seulement à cette mise en rotation de l'eau mais permet de préserver autant que possible un écoulement laminaire de l'eau dans la conduite 60.

Comme on le remarque aux figures 4 à 6, une extrémité 160 de la plaque 16 est disposée angulairement au rotor 110. L'extrémité opposée 161 est située au voisinage d'un volet de contrôle 17 de l'alimentation en eau, donc de facto, un volet de régulation du débit d'eau. Ce volet 17, particulièrement visible à la figure 6, est une plaque métallique allongée dont la section transversale est en forme de fuseau ou de saumon d'aile d'avion. En d'autres termes il a une forme hydrodynamique, son extrémité effilée 170 étant positionnée au plus près de l'extrémité 161 de l'organe de guidage 16. Dans tous les cas, on note que le volet 17, quelle que soit sa position, n'est jamais au voisinage des aubes 12 du rotor 110, et donc jamais en contact avec ce dernier. Ainsi, le volet 17 ne participe qu'à la régulation du débit d'arrivée d'eau sur le rotor 110, il ne participe pas au guidage du flux d'eau.

Le volet 17 est mobile en rotation autour d'un arbre 18 entre une première position, d'ouverture, où il autorise un passage maximal de l'eau et une seconde position, de fermeture, où il interdit tout passage de l'eau. L'arbre de rotation 18 est décalé par rapport au centre de gravité du volet 17, de sorte que le passage, par pivotement du volet 17 entre la première position ouverte, représentée aux figures 5 et 6, et la seconde position fermée, illustrée à la figure 3, soit facilité, voire initié, par l'eau circulant dans la conduite 60. Ainsi, la seconde position fermée est la position d'équilibre du volet 17 de sorte que l'arrêt de la rotation du rotor 110, et donc l'arrêt de la turbine 1 et de la production d'électricité est privilégié, ce qui est un facteur de sécurité. En d'autres termes la position d'équilibre que tend à prendre le volet 17 est une position de sécurisation de la turbine, en obturant l'arrivée d'eau.

La seconde position fermée est illustrée à la figure 3. L'extrémité 170 du volet 17 est alors en appui sur le plan incliné 62 de la conduite 60 tandis que l'autre extrémité 171 du volet 17, opposée à l'extrémité 170, est en appui sur la partie 600. Dans un mode de réalisation non illustré, des joints, par exemple en élastomère, sont prévus au niveau de ces zones de contact, afin, d'une part, d'assurer l'étanchéité et, d'autre part, de limiter l'usure mutuelle des organes en contact.

Une position intermédiaire du volet 17 est illustrée à la figure 4 dans laquelle le volet 17 est pratiquement en position ouverte, son extrémité 170 étant proche du contact avec l'extrémité 161 de la plaque de guidage 16. Dans une telle position intermédiaire, l'eau alimente le rotor 110 mais la position du volet 17 n'est pas alignée avec le flux de l'eau et la plaque 16.

La position ouverte est particulièrement visible à la figure 6. Dans cette configuration, le volet 17 est dans le prolongement de l'organe de guidage 16 qui, lui, est fixe, de sorte que leurs extrémités respectives 161 et 170 sont en contact non bloquant, l'extrémité effilée 170 du volet étant adjacente à l'extrémité 161 de l'organe de guidage 16. Dans cette position, l'ensemble formé par le volet 17 et l'organe de guidage 16 assure un écoulement laminaire dirigé de l'eau entrant sur le rotor 110, de sorte que la mise en rotation, et donc le rendement, de ce dernier est optimale.

En référence aux différentes figures, le fonctionnement de la turbine 1 est maintenant décrit. Tout d'abord, après l'ouverture en amont d'une vanne d'alimentation en eau de la turbine, connue en soi et non illustrée, on amène l'eau, de manière préférée par une conduite forcée, jusqu'à la turbine 1. Dès que cette conduite est en eau, et après si besoin avoir ouvert une autre vanne, optionnelle, située au niveau de l'arrivée d'eau 6, on commande l'ouverture du volet 17.

Dès le passage du volet à une position intermédiaire, de facto une position non fermée, l'eau s'écoule par la conduite 60 et tombe sur le rotor 110. Le trajet de l'eau sur le rotor est illustré par la flèche F à la figure 5. Lors de ce mouvement, l'eau entre dans le rotor 110 par les espaces 121 ménagées entre les aubes 12 et, du fait de l'orientation de la concavité de celles-ci, met en rotation, selon la flèche R, le rotor 110.

Après avoir traversé les espaces 121 ménagés entre les aubes 12, l'eau s'écoule par gravité dans l'espace 111 séparant les aubes 12 et l'arbre 11 du rotor 110. L'eau ressort ensuite, par gravité, du rotor 110 par les espaces 121 entre les aubes 12 situées en partie basse du rotor 110. Comme illustré à la figure 5, du fait de la rotation du rotor 110 et donc de la force centrifuge subie par l'eau, cette dernière ressort du rotor 110 non pas à la verticale de son point d'entrée mais en amont de ce dernier, c'est-à-dire sensiblement à l'aplomb de la partie rectiligne 601 de la conduite 60 qui est située entre l'arrivée 6 et la zone incurvée 600. Lors de ce mouvement de sortie, l'eau repousse les aubes 12 selon la flèche R.

Ainsi, dans une telle turbine 1, l'eau entre dans le rotor 110 en effectuant une poussée sur les aubes orientée de l'extérieur du rotor 110 en direction de l'arbre 11 et ressort du rotor en effectuant une poussée, de même sens, sur les aubes 12, donc dirigée vers l'extérieur du rotor 110 à partir de l'arbre 11.

Une fois sortie du rotor 110, l'eau s'écoule par gravité dans l'ouverture 3 du socle 2 dans un canal de sortie d'eau, ou une conduite, qui peut, par exemple, alimenter une autre turbine 1 ou un autre dispositif de production d'énergie, pour autant qu'il soit à une altitude inférieure à celle de la présente turbine.

Avec un tel fonctionnement, l'eau assure une double poussée lors de son trajet sur le rotor ce qui, au moins, assure une rotation régulière sans à-coups de ce dernier. Du fait de la forme de l'extrémité de la conduite d'amenée d'eau 60 et de la présence de l'organe de guidage 16 et du volet 17, la rotation du rotor est optimisée, que ce soit en termes de régularité et de rendement.

Par ailleurs, la présence du ressort 9 fournit un organe de sécurité optimal en cas de coupure d'alimentation en électricité des organes de commande et de manoeuvre des différentes pièces de la turbine. En effet, en cas d'une telle défaillance il est nécessaire de mettre en sécurité la turbine 1, en arrêtant le plus vite possible la rotation du rotor 110. Pour cela, il convient de stopper l'arrivée de l'eau sur le rotor 110. Dans ce cas, la tendance naturelle du volet 17 à la position de fermeture ne suffit pas à elle seule à mettre complétement le volet 17 en position fermée et à le maintenir dans cette position. Pour remédier à cela, le ressort 9 maintient le volet 17 en position fermée, étant entendu que le vérin 8 n'assure que l'ouverture du volet 17. La force de rappel du ressort 9 est suffisante pour compenser la poussée de l'eau sur le volet 17. Un tel ressort 9 est avantageusement un ressort dont le fil a une section carrée. Ainsi, avec un encombrement réduit, on obtient une force de rappel supérieure à celle d'un ressort à fil de section ronde. Il est ainsi possible de réaliser un organe de mise en sécurité autonome, ne nécessitant aucune source d'énergie externe, d'une fabrication et d'une maintenance aisées, d'un encombrement réduit et d'un coût faible. On conçoit que, si besoin, le nombre de ressort 9 est supérieur à un.

## Revendications

1. Turbine hydraulique à flux traversant (1), comportant au moins une arrivée d'eau (6) contrôlée par un volet (17) mobile entre une première position d'ouverture et une seconde position de fermeture de l'arrivée d'eau, un rotor (110) en forme de tambour, pourvu d'aubes périphériques profilées (12), dont l'arbre de rotation (11) est relié à une génératrice électrique, et une sortie d'eau (3), l'arrivée d'eau (6) comprenant une canalisation (60) dont une zone (600) voisine de son extrémité ouverte (61) en contact avec la périphérie du rotor (110) est non rectiligne, la courbure de ladite zone (600) étant non circulaire et le volet de contrôle (17) de l'arrivée d'eau étant, en position d'ouverture, aligné avec un organe de guidage (16) de l'eau fixe situé dans ladite zone (600) non rectiligne, **caractérisée en ce qu'**un ressort (9) maintient le volet (17) en position fermée, en cas de défaillance des organes de commande et d'arrêt de la rotation de la turbine.

2. Turbine selon la revendication 1, **caractérisée en ce que** l'organe de guidage est une plaque (16) courbée selon une courbure non circulaire et fixée dans la canalisation (60) d'arrivée d'eau.

3. Turbine selon la revendication 2, **caractérisée en ce que** la courbure de l'organe de guidage (16) est similaire à la courbure de la zone (600) de l'extrémité de la canalisation (60) d'arrivée d'eau en contact avec la périphérie du rotor (110).

4. Turbine selon la revendication 2, **caractérisée en ce que** la courbure de l'organe de guidage (16) est différente de la courbure de la zone (600) de l'extrémité de la canalisation (60) d'arrivée d'eau en contact avec la périphérie du rotor (110).

5. Turbine selon l'une des revendications précédentes, **caractérisée en ce que** le volet (17) est, en section transversale, profilé en saumon d'aile d'avion.

6. Turbine selon la revendication 5, **caractérisée en ce que** l'extrémité effilée (170) du volet (17) est, position d'ouverture, située dans le prolongement d'une extrémité (161) de l'organe de guidage (16) et adjacente à cette dernière.

7. Turbine selon une des revendications précédentes, **caractérisée en ce que** le volet (17) est monté pivotant autour d'un arbre (18) de rotation décalé par rapport au centre de gravité du volet (17), de sorte que la position fermée soit la position d'équilibre du volet.

## Patentansprüche

1. Hydraulische Durchströmturbine (1), aufweisend mindestens einen Wassereinlass (6), der von einer Klappe (17) gesteuert wird, die zwischen einer ersten offenen Position und einer zweiten geschlossenen Position des Wassereinlasses beweglich ist, einen Rotor (110) in Trommelform mit peripheren Profilschaufeln (12), dessen Rotationswelle (11) mit einem elektrischen Generator verbunden ist, und einen Wasserauslass (3), wobei der Wassereinlass (6) eine Kanalisation (60) umfasst, von der eine benachbarte Zone (600) ihres offenen Endes (61) im Kontakt mit der Peripherie des Rotors (110) nicht gerade ist, wobei die Krümmung der Zone (600) nicht kreisförmig ist und die Steuerklappe (17) des Wassereinlasses in offener Position mit einem festen Führungsorgan (16) des Wassers fluchtet, das sich in der nicht geraden Zone (600) befindet, **dadurch gekennzeichnet, dass** bei einer Panne der Steuer- und Stopporgane der Rotation der Turbine eine Feder (9) die Klappe (17) in geschlossener Position hält.

2. Turbine nach Anspruch 1, **dadurch gekennzeichnet, dass** das Führungsorgan eine gemäß einer nicht kreisförmigen Krümmung gekrümmte Platte (16) ist und in der Wassereinlass-Kanalisation (60) befestigt ist.

3. Turbine nach Anspruch 2, **dadurch gekennzeichnet, dass** die Krümmung des Führungsorgans (16) der Krümmung der Zone (600) des Endes der Wassereinlass-Kanalisation (60) im Kontakt mit der Peripherie des Rotors (110) ähnelt.

4. Turbine nach Anspruch 2, **dadurch gekennzeichnet, dass** sich die Krümmung des Führungsorgans (16) von der Krümmung der Zone (600) des Endes der Wassereinlass-Kanalisation (60) im Kontakt mit der Peripherie des Rotors (110) unterscheidet.

5. Turbine nach einem der vorangehenden Ansprüche, **dadurch gekennzeichnet, dass** die Klappe (17) im Querschnitt ein Flügelspitzenprofil hat.

6. Turbine nach Anspruch 5, **dadurch gekennzeichnet, dass** sich das spitz zulaufende Ende (170) der Klappe (17) in offener Position in der Verlängerung eines Endes (161) des Führungsorgans (16) befindet und diesem benachbart ist.

7. Turbine nach einem der vorangehenden Ansprüche, **dadurch gekennzeichnet, dass** die Klappe (17) um eine Rotationswelle (18) schwenkend angebracht ist, die in Bezug auf den Schwerpunkt der Klappe (17) derart versetzt ist, dass die geschlossene Position die Gleichgewichtsposition der Klappe ist.

## Claims

1. A hydraulic though-flow turbine (1) comprising at least one water intake (6) controlled by a shutter (17) that can move between a first position for opening the water intake and a second position for closing the water intake, a rotor (110) in the form of a drum, provided with peripheral profiled vanes (12), the rotary shaft (11) of which is connected to an electrical generator, and a water outlet (3), the water intake (6) comprising a conduit (60), of which one zone (600) close to its open end (61) in contact with the periphery of the rotor (110) is not straight, the curvature of said zone (600) being non-circular and the shutter (17) for controlling the water intake being, when in the open position, aligned with a stationary member (16) for guiding the water situated in said non-straight zone (600), **characterised in that** a spring (9) holds the shutter (17) in the closed position in the event that there is a fault in the control members and the rotation of the turbine stops.

2. The turbine according to claim 1, **characterised in that** the guide member is a curved plate (16) having a non-circular curvature and secured in the water intake conduit (60).

3. The turbine according to claim 2, **characterised in that** the curvature of the guide member (16) is similar to the curvature of the end zone (600) of the water intake conduit (60) in contact with the periphery of the rotor (110).

4. The turbine according to claim 2, **characterised in that** the curvature of the guide member (16) is different from the curvature of the end zone (600) of the water intake conduit (60) in contact with the periphery of the rotor (110).

5. The turbine according to any one of the preceding claims, **characterised in that** the shutter (17) is, in cross section, profiled as an aircraft wing tip.

6. The turbine according to claim 5, **characterised in that**, in the open position, the tapered end (170) of the shutter (17) is situated in the extension of one end (161) of the guide member (16) and adjacent to said member.

7. The turbine according to any one of the preceding claims, **characterised in that** the shutter (17) is pivotably mounted about a rotary shaft (18) that is offset with respect to the centre of gravity of the shutter (17), such that the closed position is the equilibrium position of the shutter.
